# EUROPÄISCHE PATENTSCHRIFT

(11) **EP 3 124 362 B1**
(45) Veröffentlichungstag und Bekanntmachung des Hinweises auf die Patenterteilung: **13.12.2017**
(21) Anmeldenummer: 15178953.4
(22) Anmeldetag: 29.07.2015
(51) Int. Cl.: B62D 21/11, B62D 21/02

(54) **HILFSRAHMEN, INSBESONDERE HINTERACHSHILFSRAHMEN, FÜR EIN PERSONENKRAFTFAHRZEUG**
SUBFRAME, IN PARTICULAR REAR AXLE SUBFRAME, FOR A PASSENGER VEHICLE
FAUX-CHASSIS, PLUS PARTICULIEREMENT FAUX-CHASSIS D'ESSIEU ARRIERE, POUR UN VEHICULE PARTICULIER

(43) Veröffentlichungstag der Anmeldung: 01.02.2017
(73) Patentinhaber: Autotech Engineering Deutschland GmbH, 33647 Bielefeld (DE)
(72) Erfinder: CHAPPLE, Adrian, Birtley, Durham DH3 1RS (GB); TOLLEY, John, Spennymoor, Durham DL16 6XY (GB); MATTHEWS, Michael, Newton Aycliffe, Durham DL5 4FF (GB); MANTON, Philip, Middlesbrough, Yorkshire TS5 7LE (GB)
(74) Vertreter: Cohausz & Florack

(56) Entgegenhaltungen:
- DE-A1-102012 021 562
- DE-A1-102012 111 461
- DE-A1-102014 102 815
- JP-A- 2003 154 966
- JP-A- 2010 090 922

## Beschreibung

Die Erfindung betrifft einen Hilfsrahmen, insbesondere Hinterachshilfsrahmen, für ein Personenkraftfahrzeug (Personenkraftwagen), umfassend mindestens zwei Längsträger, mindestens einen Querträger, welcher die Längsträger miteinander verbindet, Karosserie-Anbindungselemente zur Anbindung des Hilfsrahmens an eine Karosserie und mindestens eine Lenkeranbindung je Fahrzeugseite.

Unter dem Begriff "Längsträger" werden hier Tragelemente oder Abschnitte von Tragelementen des Hilfsrahmens verstanden, die sich im montierten Zustand des Hilfsrahmens im Wesentlichen entlang der Längsachse des betreffenden Personenkraftfahrzeuges erstrecken.

Derartige Hilfsrahmen, auch als Achsträger bezeichnet, sind in vielfältigen Ausführungen bekannt (siehe z.B. DE 10 2012 021 562 A1 und DE 10 2012 111 461 A1 sowie DE102014102815). Sie sollen bei hoher Festigkeit und Steifigkeit möglichst leicht sein und weisen üblicherweise Lenkeranbindungen (Lageraufnahmen) für Radführungselemente und andere Aggregate auf, um als Vormontageeinheit den Einbau kompletter Vorder- oder Hinterachsmodule mit Antriebseinheiten zu ermöglichen.

Viele Automobilhersteller bieten neben Personenkraftfahrzeugen mit relativ niedriger Bodenfreiheit auch ähnliche Personenkraftfahrzeuge mit relativ hoher Bodenfreiheit, insbesondere sogenannte SUV (Sport Utility Vehicle) an. Obwohl sich die Karosserie und der Antrieb eines Personenkraftfahrzeugs, welches eine relativ hohe Bodenfreiheit aufweist, oft kaum von der Karosserie und dem Antrieb eines Personenkraftfahrzeugs mit relativ niedriger Bodenfreiheit unterscheiden, werden für beide Fahrzeugvarianten wegen der verschieden hohen Lenkeraufhängung zur Erzielung der unterschiedlichen Bodenfreiheit unterschiedliche Hilfsrahmen gefertigt bzw. vorgehalten. Dies verursacht relativ hohe Fertigungskosten.

Der Erfindung liegt die Aufgabe zugrunde, einen Hilfsrahmen der eingangs genannten Art zu schaffen, der es erlaubt, möglichst spät im Fertigungsprozess festzulegen, ob der Hilfsrahmen für einen Personenkraftwagen mit relativ hoher Bodenfreiheit oder mit relativ niedriger Bodenfreiheit gefertigt wird.

Diese Aufgabe wird durch einen Hilfsrahmen mit den in Anspruch 1 angegebenen Merkmalen gelöst. Bevorzugte und vorteilhafte Ausgestaltungen des erfindungsgemäßen Hilfsrahmens sind in den Unteransprüchen angegeben.

Der erfindungsgemäße Hilfsrahmen ist dadurch gekennzeichnet, dass seine Lenkeranbindung mindestens ein Einsatzteil aufweist, das in einer Öffnung des Hilfsrahmens formschlüssig aufgenommen und mit dem Hilfsrahmen stoffschlüssig und/oder kraftschlüssig verbunden ist, wobei das Einsatzteil ein Verbindungsteil zur Ausbildung einer Verschraubung aufweist und aus einer mindestens zwei verschiedene Einsatzteile umfassenden Gruppe ausgewählt ist, wobei die verschiedenen Einsatzteile sich hinsichtlich der vertikalen Position des Verbindungsteils voneinander unterscheiden.

Die Erfindung basiert auf der Idee, an einem Hilfsrahmen der eingangs genannten Art mittels verschiedener Einsatzteile, die sich hinsichtlich der vertikalen Position eines daran vorgesehenen Verbindungsteils voneinander unterscheiden, eine variabel einstellbare Lenkeraufhängung, insbesondere Trapezlenkeraufhängung zu realisieren.

Der erfindungsgemäße Hilfsrahmen ermöglicht es, relativ spät im Fertigungsprozess des Hilfsrahmens festzulegen, ob der Hilfsrahmen an einer Karosserie eines Fahrzeuges mit relativ hoher Bodenfreiheit oder an einer Karosserie eines Fahrzeuges mit relativ niedriger Bodenfreiheit montiert wird. Der erfindungsgemäße Hilfsrahmen ist bis zu der Integration des ausgewählten fahrzeugvariantenspezifischen Einsatzteils, welches das in Abhängigkeit der Fahrzeugvariante (SUV oder Normalfahrwerkslimousine) verschieden hoch angeordnete Verbindungsteil zur Lenkeranbindung aufweist, ein sogenanntes Gleichteil für unterschiedliche Fahrzeugvarianten. Hierdurch lassen sich die Fertigungskosten für derartige Hilfsrahmen erheblich reduzieren.

Eine vorteilhafte Ausgestaltung des erfindungsgemäßen Hilfsrahmens ist dadurch gekennzeichnet, dass die Lenkeranbindung je Fahrzeugseite mindestens zwei Einsatzteile aufweist, die in Öffnungen des Hilfsrahmens, welche in Fahrzeuglängsrichtung voneinander beabstandet sind, formschlüssig aufgenommen und mit dem Hilfsrahmen stoffschlüssig und/oder kraftschlüssig verbunden sind, wobei das jeweilige Einsatzteil ein Verbindungsteil zur Ausbildung einer Verschraubung aufweist und aus einer mindestens zwei verschiedene Einsatzteile umfassenden Gruppe ausgewählt ist, wobei die verschiedenen Einsatzteile sich hinsichtlich der vertikalen Position des Verbindungsteils voneinander unterscheiden. Diese Ausgestaltung ermöglicht bei relativ geringem Bauteilgewicht eine robuste und wenig Bauraum benötigende Anbindung eines hundeknochenförmigen Gelenkstabes, der sich durch eine mit dem Fahrwerkslenker, z.B. Trapezlenker, verbundene Gelenklagerbuchse (sog. "dog bone bush") erstreckt. Vorzugsweise sind dabei die die Einsatzteile aufnehmenden Öffnungen in Kantenabschnitten des Hilfsrahmens angeordnet, die sich im Wesentlichen vertikal oder in Richtung der Fahrzeug-Hochachse erstrecken und eine Einbuchtung zur teilweisen Aufnahme eines Lenkerarmendes begrenzen.

Nach einer weiteren vorteilhaften Ausgestaltung des erfindungsgemäßen Hilfsrahmens ist die jeweilige das Einsatzteil aufnehmende Öffnung in einem in dem Hilfsrahmen integrierten Blechformteil ausgebildet. Ein entsprechendes Blechformteil versteift den Hilfsrahmen, wobei das Gewicht des Blechformteils nur gering ist oder das Gewicht des Blechformteils sogar durch eine Verringerung der Materialdicke von anderen Hilfsrahmenabschnitten kompensiert werden kann.

Eine weitere vorteilhafte Ausgestaltung der Erfindung sieht vor, dass die das Einsatzteil aufnehmende Öffnung eine asymmetrische Innenkontur besitzt, wobei das Einsatzteil eine der Innenkontur komplementäre Umfangskontur aufweist. Hierdurch wird das lagerichtige Einsetzen des Einsatzteils in die ihm zugeordnete Öffnung erleichtert bzw. sichergestellt.

Das jeweilige Einsatzteil ist vorzugsweise aus einem Metallgussteil hergestellt, wobei in dem Metallgussteil das Verbindungsteil zur Ausbildung einer Verschraubung für die Lenkeranbindung als Gewindebohrung ausgeführt ist. Eine komplexe Geometrie des Einsatzteiles lässt sich so materialsparend und damit kostengünstig realisieren. Insbesondere lässt sich so eine relativ lange Gewindebohrung zur Erzielung eines hohen Kraftschlusses bei geringem Gewicht des Einsatzteiles kostengünstig verwirklichen. Die Gewindebohrung ist dabei vorzugsweise in einem buchsenförmigen Abschnitt des Einsatzteils vorgesehen. Die Länge der Gewindebohrung ist dann größer als ihr Innendurchmesser. Vorzugsweise beträgt die Länge der Gewindebohrung mehr als das zweifache ihres Innendurchmessers.

Damit das Einsatzteil bei geringem Gewicht einen hohen Kraftschluss sowie eine besonders zuverlässige Anbindung des Fahrwerklenkers an der Gewindebohrung ermöglicht, weist der buchsenförmige Abschnitt vorzugsweise eine gegenüber einer Außenseite des Einsatzteiles vorstehende Stirnseite auf. Die vorstehende Stirnseite dient als Anlage- bzw. Klemmfläche für das anzuschraubende Element des Fahrwerklenkers, beispielsweise für den hundeknochenförmigen Gelenkstab ("dog bone") der mit dem Fahrwerkslenker verbundenen Gelenklagerbuchse.

Hinsichtlich eines geringen Gewichts des Einsatzteils und der Verwendung eines relativ kurzen hundeknochenförmigen Gelenkstabes ist es von Vorteil, wenn gemäß einer weiteren Ausgestaltung der Erfindung der buchsenförmige Abschnitt des Einsatzteiles radial mit einer Außenseite des Einsatzteiles abschließt oder gegenüber dieser Außenseite radial vorsteht.

Das in die zugeordnete Öffnung eingesetzte Einsatzteil kann auf verschiedene Weise mit dem Hilfsrahmen fest verbunden werden. Vorzugsweise wird das jeweilige Einsatzteil mit dem Hilfsrahmen verschweißt und/oder verlötet und/oder verklebt. Alternativ kann das in die zugeordnete Öffnung eingesetzte Einsatzteil auch mittels einer Schraubverbindung lösbar mit dem Hilfsrahmen verbunden werden bzw. sein.

Eine weitere bevorzugte Ausgestaltung des erfindungsgemäßen Hilfsrahmens ist dadurch gekennzeichnet, dass das untere Ende der das Einsatzteil aufnehmenden Öffnung durch einen plattenförmigen, im Wesentlichen horizontal angeordneten Abschnitt des Hilfsrahmens begrenzt ist. Diese Ausgestaltung ermöglicht bei vorgegebenen Abmessungen des Bereichs des Hilfsrahmens, in welchem die Öffnung zur Aufnahme eines der mindestens zwei verschiedenen Einsatzteile für die variable Einstellung der vertikalen Position der Lenkeraufhängung vorgesehen ist, die Öffnung und somit die verschiedenen Einsatzteile relativ hoch auszuführen, um die vertikale Position der Lenkeraufhängung und damit die Bodenfreiheit des betreffenden Fahrzeuges um ein möglichst großes Maß variieren zu können. Zudem kann mittels des plattenförmigen, im Wesentlichen horizontal angeordneten Abschnitts des Hilfsrahmens die Steifigkeit des Hilfsrahmens im Bereich der Lenkeraufhängung erheblich erhöht werden.

In diesem Zusammenhang sieht eine weitere Ausgestaltung der Erfindung vor, dass das Einsatzteil an seinem dem plattenförmigen Abschnitt zugewandten Ende einen verdickten, nach außen vorstehenden Kantenabschnitt aufweist. An einem solchen Kantenabschnitt lässt sich eine optimale Schweißverbindung zur Befestigung des Einsatzteiles an dem Hilfsrahmen erzielen, insbesondere dann, wenn andere Abschnitte des Einsatzteiles aus Gründen der Gewichtsreduzierung relativ dünn ausgeführt sind.

Des Weiteren ist es vorteilhaft, wenn bei der oben genannten Ausgestaltung des erfindungsgemäßen Hilfsrahmens, bei welcher die Lenkeranbindung je Fahrzeugseite zwei Einsatzteile aufweist, die in voneinander beabstandeten Öffnungen aufgenommen und mit dem Hilfsrahmen stoffschlüssig und/oder kraftschlüssig verbunden sind, und bei welcher das untere Ende der jeweiligen Öffnung durch einen plattenförmigen, im Wesentlichen horizontal angeordneten Abschnitt des Hilfsrahmens begrenzt ist, dieser plattenförmige Abschnitt zwischen den Öffnungen eine Einbuchtung aufweist. Hierdurch kann die höhenvariable Lenkeraufhängung möglichst platzsparend ausgeführt werden.

Nach einer weiteren Ausgestaltung des erfindungsgemäßen Hilfsrahmens weist das jeweilige Einsatzteil neben der Gewindebohrung bzw. dem Verbindungsteil zur Ausbildung einer Verschraubung mindestens ein Durchgangsloch auf. Das Durchgangsloch kann zum Einstecken eines entsprechenden Werkzeugs zur Handhabung des Einsatzteiles bei dessen Einführung in die zugeordnete Öffnung des Hilfsrahmens genutzt werden. Außerdem kann durch das Durchgangsloch Wasser ablaufen, das sich andernfalls hinter dem Einsatzteil sammeln könnte.

Der erfindungsgemäße Hilfsrahmen ist vorzugsweise als geschweißte Rahmenstruktur ausgebildet, wobei die Längsträger und/oder der mindestens eine Querträger aus Blechformteilen gebildet bzw. zusammengesetzt sind.

Nachfolgend wird die Erfindung anhand einer Ausführungsbeispiele darstellenden Zeichnung erläutert. Es zeigen:
- Fig. 1: eine perspektivische Darstellung eines erfindungsgemäßen Hilfsrahmens für ein Personenkraftfahrzeug mit Öffnungen zur Aufnahme von Einsatzteilen zur variablen Höheneinstellung der Lenkeraufhängung;
- Fig. 2a und 2b: zwei Einsatzteile zur Einstellung einer niedrigen Lenkeraufhängung und somit niedrigen Bodenfreiheit des Personenkraftfahrzeuges, in Vorderansicht bzw. in perspektivischer Darstellung;
- Fig. 3a und 3b: zwei Einsatzteile zur Einstellung einer hohen Lenkeraufhängung und somit hohen Bodenfreiheit des Personenkraftfahrzeuges, in Vorderansicht bzw. in perspektivischer Darstellung;
- Fig. 4: einen Abschnitt des Hilfsrahmens gemäß Fig.1 mit in den Öffnungen aufgenommenen Einsatzteilen gemäß Fig. 2a und Fig. 2b sowie einem daran montierten Querlenker; und
- Fig. 5: den Abschnitt des Hilfsrahmens gemäß Fig. 1 mit in den Öffnungen aufgenommenen Einsatzteilen gemäß Fig. 3a und Fig. 3b sowie einem daran montierten Querlenker.

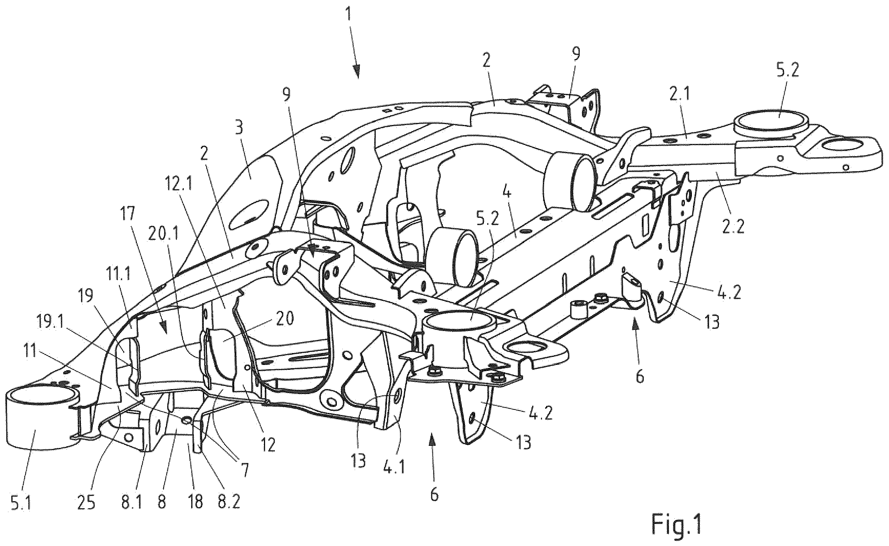

Der in den Figuren 1, 4 und 5 gezeigte Hilfsrahmen 1 ist für ein Personenkraftfahrzeug (PKW) bestimmt. Der Hilfsrahmen ist hier beispielhaft als Hinterachshilfsrahmen ausgeführt.

Der Hilfsrahmen 1 ist aus zwei sich im Wesentlichen in Fahrzeuglängsrichtung erstreckenden Längsträgern 2, einem ersten oder vorderen Querträger 3 und einem zweiten oder hinteren Querträger 4 zusammengesetzt. Die beiden in Fahrzeuglängsrichtung voneinander beabstandeten Querträger 3, 4 verbinden die Längsträger 2 miteinander, so dass sich ein Rahmen bzw. ein durch die Träger 2, 3, 4 umgrenzter Raum ergibt.

Der Hilfsrahmen 1 ist als geschweißte Rahmenstruktur ausgebildet. Die Längsträger 2 sowie die Querträger 3, 4 sind vorzugsweise aus Blechformteilen, besonders bevorzugt aus Stahlblechformteilen gebildet. Die Längsträger 2 sind im Wesentlichen rohrförmig ausgebildet und aus miteinander verschweißten Blechschalen 2.1, 2.2 zusammengesetzt. Zur Anbindung des Hilfsrahmens 1 an eine Fahrzeugkarosserie sind an den Enden der Längsträger Anbindungselemente 5.1, 5.2 vorgesehen. Die Karosserie-Anbindungselemente 5.1, 5.2 sind aus mit den Längsträgern 2 verschweißten Rohrstutzen oder Buchsen gebildet, in die Lager, vorzugsweise Gummibuchsen aufweisende Lager eingesetzt oder eingepresst werden.

Des Weiteren weist der Hilfsrahmen 1 Lenkeranbindungen 6, 7, 8, 9 für eine rechte und eine linke Radaufhängung auf. In dem dargestellten Ausführungsbeispiel sind je Fahrzeugseite zwei in Fahrzeuglängsrichtung voneinander beabstandete Lenkeranbindungen 6, 7 für einen als Dreiecks- oder Trapezlenkers ausgeführten Querlenker 10, 10' vorgesehen. Die hintere Lenkeranbindung 6 für den Querlenker 10, 10' ist am Ende des hinteren Querträgers 4 angeordnet, während die vordere Lenkeranbindung 7 an Blechformteilen 11, 12 vorgesehen ist, die mit dem Längsträger 2 verbunden und im Wesentlichen oder hauptsächlich zwischen dem vorderen Karosserie-Anbindungselement 5.1 und dem vorderen Querträger 3 angeordnet sind.

Die hintere Lenkeranbindung 6 ist durch nach unten vorstehende, voneinander beabstandete Laschen oder Abschnitte 4.1, 4.2 des hinteren Querträgers 4 gebildet, wobei die Abschnitte 4.1, 4.2 miteinander fluchtende Durchgangslöcher 13 zur Aufnahme eines Gelenkbolzens (nicht gezeigt) aufweisen. Der Gelenkbolzen erstreckt sich im montierten Zustand des Querlenkers 10, 10' durch eine mit dem Querlenker 10,10' verbundene Lagerbuchse 14.

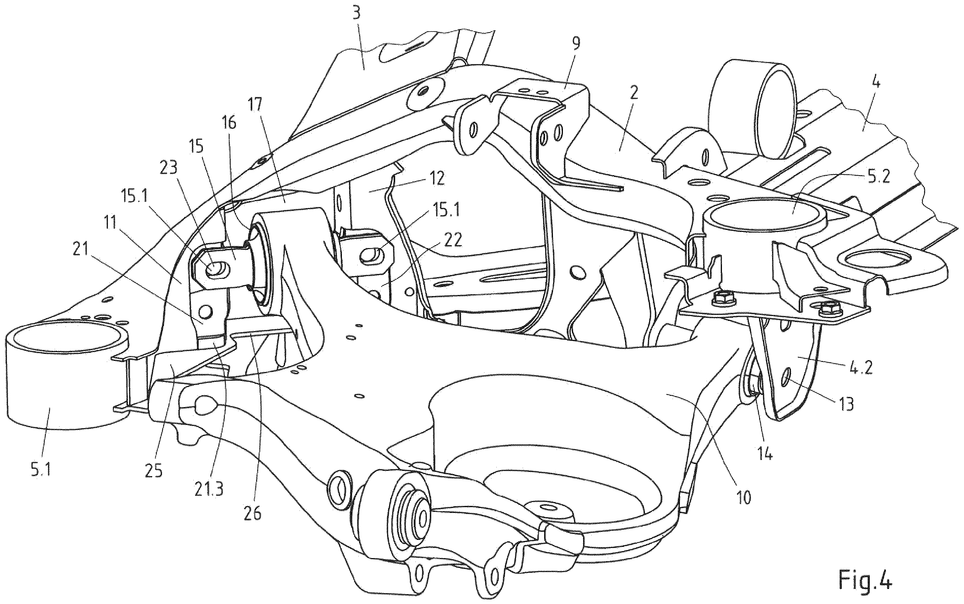

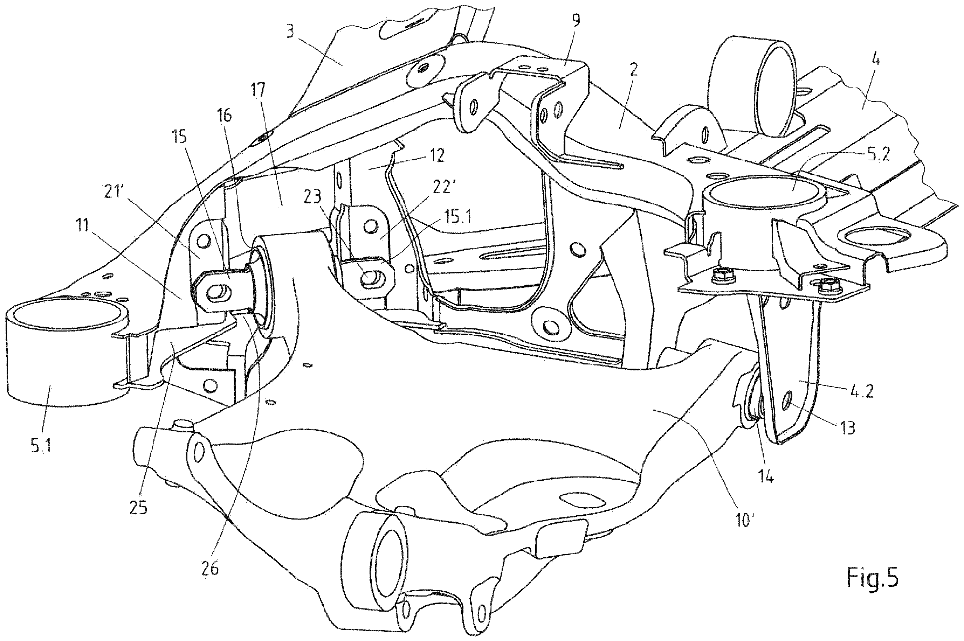

Die vordere Lenkeranbindung 7 ist vorzugsweise für die Anbindung einer einen "hundeknochenförmigen" Gelenkbolzen 15 aufweisenden Lagerbuchse 16 des Querlenkers 10,10' ausgebildet (siehe Figuren 4 und 5). Die Enden des "hundeknochenförmigen" Gelenkbolzens 15 sind abgeflacht und weisen Durchgangslöcher 15.1 zur Aufnahme von Schraubbolzen auf. Der Gelenkbolzen 15 wird an den eine Einbuchtung oder Nische 17 begrenzenden Blechformteilen 11, 12 befestigt, wobei die dem Gelenkbolzen 15 zugeordnete Lagerbuchse 16 im montierten Zustand des Querlenkers 10, 10' teilweise in die Einbuchtung (Nische) 17 ragt.

Zudem sind an dem Hilfsrahmen 1 je Fahrzeugseite eine obere Lenkeranbindung 9 und eine untere Lenkeranbindung 8 vorgesehen. Die obere Lenkeranbindung 9 besteht aus einem gabelförmigen Blechformteil, das an die Oberseite bzw. Außenseite des jeweiligen Längsträgers 2 angeschweißt ist. Das gabelförmige Blechformteil 9 steht dabei gegenüber der Außenseite des Längsträgers 2 vor.

Die untere Lenkeranbindung 8 ist unterhalb der für den Querlenker (Dreiecks- oder Trapezlenker) 10, 10' bestimmten vorderen Lenkeranbindung 7 angeordnet. Sie ist beispielsweise aus einer Blechkonsole gebildet, die eine Einbuchtung oder Aufnahme 18 für eine Lagerbuchse aufweist, wobei die Aufnahme (Einbuchtung) 18 durch von einander beabstandete Flächenabschnitte der Blechkonsole 8.1, 8.2 begrenzt ist, die miteinander fluchtende Durchgangslöcher zur Aufnahme eines Gelenkbolzens aufweisen. Die Blechkonsole 8 ist an den Blechformteilen 11, 12 der vorderen Lenkeranbindung 7 angeschweißt. Alternativ kann die Blechkonsole 8 zumindest teilweise einstückig mit einem der Blechformteile 11, 12 ausgebildet sein.

Erfindungsgemäß ist die vordere Lenkeranbindung (Lenkeraufhängung) 7 des Hilfsrahmens 1 variabel einstellbar ausgeführt, so dass möglichst spät im Fertigungsprozess festgelegt werden kann, ob der Hilfsrahmen 1 in ein Fahrzeug mit hoher Bodenfreiheit, zum Beispiel in ein SUV, oder in ein Fahrzeug mit niedriger Bodenfreiheit, zum Beispiel eine relativ tiefliegende Limousine, eingesetzt wird. Hierzu weisen die Blechformteile 11,12 Öffnungen 19, 20 zur formschlüssigen Aufnahme von Einsatzteilen (Einsätzen) 21, 22, 21', 22' auf.

Das jeweilige Einsatzteil 21, 22, 21', 22' weist dabei ein Verbindungsteil für eine Verschraubung, vorzugsweise eine Mutter oder Gewindebohrung 23 auf und ist aus einer Gruppe ausgewählt, die mindestens zwei verschiedene solche Einsatzteile 21, 22, 21', 22' umfasst, wobei die verschiedenen Einsatzteile 21, 22, 21', 22' sich hinsichtlich der vertikalen Position des Verbindungsteils (beispielsweise der Mutter oder Gewindebohrung 23) voneinander unterscheiden.

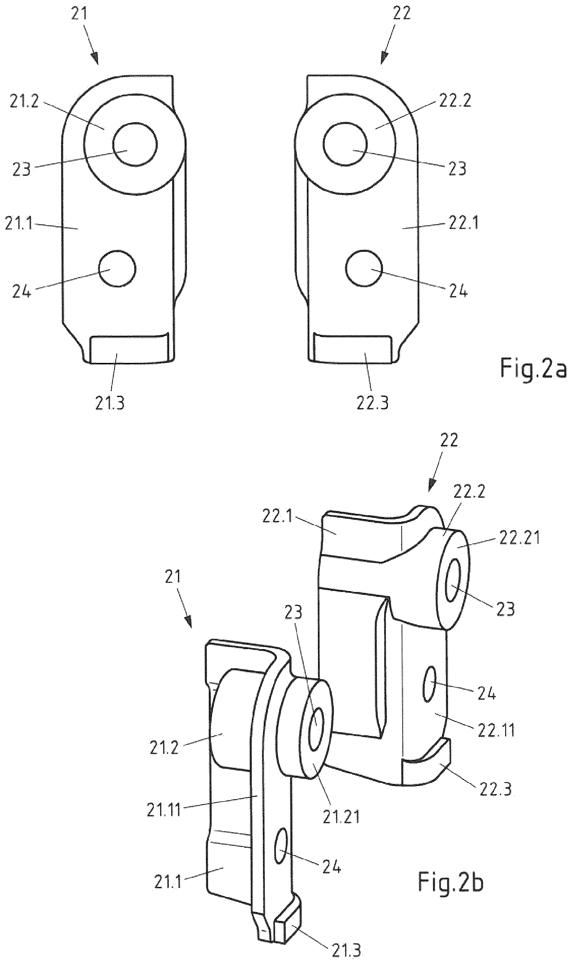

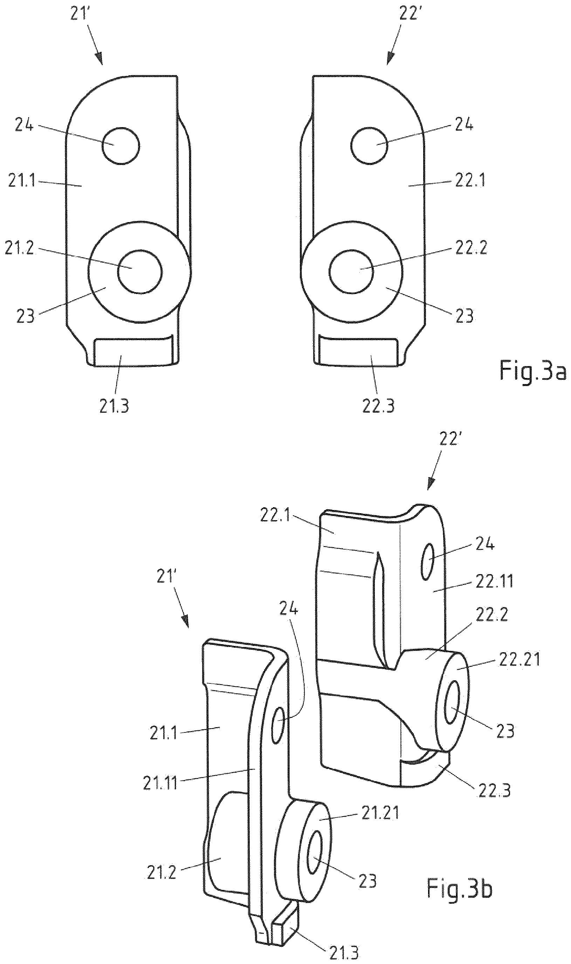

In den Figuren 2a und 2b sind rechte und linke Einsatzteile (Einsätze) 21, 22 zur Einstellung einer niedrigen Lenkeraufhängung bzw. niedrigen Bodenfreiheit dargestellt, wohingegen die Figuren 3a und 3b rechte und linke Einsatzteile (Einsätze) 21', 22' zur Einstellung einer hohen Lenkeraufhängung bzw. hohen Bodenfreiheit zeigen.

Die Blechformteile 11,12 des Hilfsrahmens 1 sind abgewinkelt und weisen einen länglichen Eck- oder Kantenabschnitt 11.1,12.1 auf, der sich im Wesentlichen vertikal erstreckt. Die Kantenabschnitte 11.1, 12.1 begrenzen die Einbuchtung 17, die der teilweisen Aufnahme des Armendes des Querlenkers 10,10' dient. Die die Einsatzteile 21, 22 oder 21', 22' aufnehmenden Öffnungen 19, 20 sind in dem Eck- oder Kantenabschnitt 11.1, 12.1 der Blechformteile 11,12 angeordnet. Die Öffnungen 19, 20 sowie die darin einfügbaren Einsatzteil 21, 21',22, 22' sind vorzugsweise länglich ausgebildet, wobei sich die Längsmittelachse der jeweiligen Öffnung 19, 20 bzw. des Einsatzteils 21, 22, 21', 22' im Wesentlichen vertikal oder parallel zur Fahrzeug-Hochachse erstreckt. Des Weiteren ist zu erkennen, dass die jeweilige Öffnung 19, 20 eine asymmetrische Innenkontur aufweist, wobei sich die Innenkontur der linken Öffnung 19 von der Innenkontur der rechten Öffnung 20 unterscheidet (siehe Fig. 1).

Die linken Einsatzteile 21, 21' und rechten Einsatzteile 22, 22' haben unterschiedliche Außenkonturen, so dass in die rechte Öffnung 19 nur eines der rechten Einsatzteile 21, 21' eingefügt werden kann, während in die linke Öffnung 20 nur eines der linken Einsatzteile 22, 22' eingefügt werden kann. Die rechten Einsatzteile 22, 22' haben eine Außenkontur, die im Wesentlichen komplementär zu der Innenkontur der ihnen zugeordneten rechten Öffnung 20 ist. Dementsprechend haben die linken Einsatzteile 21, 21' eine Außenkontur, die im Wesentlichen komplementär zu der Innenkontur der ihnen zugeordneten linken Öffnung 19 ist.

Das jeweilige Einsatzteil 21, 22, 21', 22' besteht vorzugsweise aus einem Metallgussteil, das mit dem zugeordneten Blechformteil 11, 12 des Hilfsrahmens 1 verschweißbar ist. Bei dem Metallgussteil kann es sich beispielsweise um ein Stahlgussteil handeln. Alternativ können die Einsatzteile auch aus Leichtmetall gefertigt sein, beispielsweise aus Aluminium. Die Verbindung der Einsatzteile 21, 22, 21', 22' mit den Blechformteilen 11, 12 kann dabei insbesondere auch als Löt- oder Klebeverbindung ausgeführt werden.

Das jeweilige Einsatzteil 21, 22, 21', 22' besitzt einen winkelförmigen Grundkörper 21.1, 22.1 mit einem daran einstückig angeformten buchsenförmigen Abschnitt 21.2, 22.2, der den vorder- oder stirnseitigen Schenkel 21.11, 22.11 des Grundkörpers 21.1, 22.1 durchdringt. Der buchsenförmige Abschnitt 21.2, 22.2 hat eine gegenüber der Vorderseite des Einsatzteiles 21, 22, 21', 22' vorstehende Stirnseite 21.21, 22.21. Der Umfang des buchsenförmigen Abschnitts 21.2, 22.2 schließt radial mit der seitlichen Außenfläche des Grundkörpers 21.1, 22.1 ab bzw. steht etwas gegenüber dieser Außenfläche, welche die Einbuchtung 17 der Lenkeranbindung 7 begrenzt, radial vor.

Das Einsatzteil 21, 22, 21', 22' weist neben der Gewindebohrung 23, radial beabstandet von dem buchsenförmigen Abschnitt 21.2, 22.2, mindestens ein Durchgangsloch 24 auf. Das Durchgangsloch 24 dient der Handhabung des Einsatzteils 21, 22, 21', 22' beim Einfügen in die ihm zugeordnet Öffnung 19, 20. Darüber hinaus kann das Einsatzteil 21, 22, 21', 22' weitere Durchgangslöcher (nicht gezeigt) aufweisen, die zum Beispiel als Drainagelöcher dienen.

Das untere Ende der die Einsatzteile 21, 22, 21', 22' aufnehmenden Öffnungen 19, 20 ist durch einen plattenförmigen, im Wesentlichen horizontal angeordneten Blechabschnitt 25 des Hilfsrahmens 1 begrenzt. Der plattenförmige Blechabschnitt 25 weist zwischen den Öffnungen 19, 20 eine Einbuchtung 26 auf, um mehr Freiraum für den gelenkig anzubindenden Querlenker 10, 10' in der unteren bzw. niedrigen Position der Lenkeraufhängung zu schaffen.

Vorzugsweise weist das Einsatzteil 21, 22, 21', 22' an seinem dem plattenförmigen Blechabschnitt 25 zugewandten Ende einen verdickten, nach außen vorstehenden Kantenabschnitt 21.3, 22.3 auf. Hierdurch lässt sich das Einsatzteil 21, 22, 21', 22' besonders zuverlässig an dem Hilfsrahmen 1, nämlich dem plattenförmigen Blechabschnitt 25 anschweißen. Vorzugsweise wird das Einsatzteil 21,22, 21', 22' durch eine kontinuierliche Schweißnaht mit dem unteren Blechabschnitt 25 sowie mit der in der Einbuchtung 17 der Lenker anbindung 7 liegenden vertikalen Kante der Öffnung 19, 20 verbunden.

In Fig. 4 ist eine Einbausituation dargestellt, in welcher in die Öffnungen 19, 20 der vorderen Lenkeranbindung 7 die Einsatzteile für eine relativ niedrige Lenkeraufhängung gemäß Fig. 2a eingefügt sind und an den Gewindebohrungen 23 der Einsatzteile 21, 22 der hundeknochenförmige Gelenkbolzen 15 der vorderen Lagerbuchse 16 des Querlenkers 10 angeschraubt ist. Die hierzu erforderlichen Schrauben sind der Übersichtlichkeit halber nicht gezeigt.

In Fig. 5 ist dagegen eine Einbausituation dargestellt, in welcher in die Öffnungen 19, 20 die Einsatzteile 21', 22' für eine relativ hohe Lenkeraufhängung gemäß Fig. 3a eingefügt sind und an den Gewindebohrungen 23 der hundeknochenförmige Gelenkbolzen 15 der vorderen Lagerbuchse 16 des Querlenkers 10' angeschraubt ist. Die Schrauben sind auch hier nicht gezeigt. Der in Fig. 5 gezeigte Querlenker oder Trapezlenker 10' unterscheidet sich von dem in Fig. 4 gezeigten Querlenker (Trapezlenker) 10, der für ein Personenkraftfahrzeug mit relativ niedriger Bodenfreiheit bzw. Lenkeraufhängung bestimmt ist.

## Patentansprüche

1. Hilfsrahmen, insbesondere Hinterachshilfsrahmen, für ein Personenkraftfahrzeug, umfassend mindestens zwei Längsträger (2), mindestens einen Querträger (3, 4), welcher die Längsträger (2) miteinander verbindet, Karosserie-Anbindungselemente (5.1, 5.2) zur Anbindung des Hilfsrahmens (1) an eine Karosserie und mindestens eine Lenkeranbindung (7) je Fahrzeugseite, **dadurch gekennzeichnet, dass** die Lenkeranbindung (7) mindestens ein Einsatzteil (21, 22, 21', 22') aufweist, das in einer Öffnung (19, 20) des Hilfsrahmens formschlüssig aufgenommen und mit dem Hilfsrahmen (1) stoffschlüssig und/oder kraftschlüssig verbunden ist, wobei das Einsatzteil (21, 22, 21', 22') ein Verbindungsteil (23) zur Ausbildung einer Verschraubung aufweist und aus einer mindestens zwei verschiedene Einsatzteile (21, 22; 21', 22') umfassenden Gruppe ausgewählt ist, wobei die verschiedenen Einsatzteile (21, 22, 21', 22') sich hinsichtlich der vertikalen Position des Verbindungsteils (23) voneinander unterscheiden.

2. Hilfsrahmen nach Anspruch 1, **dadurch gekennzeichnet, dass** die Lenkeranbindung (7) je Fahrzeugseite mindestens zwei Einsatzteile (21, 22, 21', 22') aufweist, die in Öffnungen (19, 20) des Hilfsrahmens, welche in Fahrzeuglängsrichtung voneinander beabstandet sind, formschlüssig aufgenommen und mit dem Hilfsrahmen (1) stoffschlüssig und/oder kraftschlüssig verbunden sind, wobei das jeweilige Einsatzteil (21, 22, 21', 22') ein Verbindungsteil (23) zur Ausbildung einer Verschraubung aufweist und aus einer mindestens zwei verschiedene Einsatzteile (21, 22, 21', 22') umfassenden Gruppe ausgewählt ist, wobei die verschiedenen Einsatzteile (21, 22, 21', 22') sich hinsichtlich der vertikalen Position des Verbindungsteils (23) voneinander unterscheiden.

3. Hilfsrahmen nach Anspruch 2, **dadurch gekennzeichnet, dass** die Öffnungen (19, 20) in Kantenabschnitten (11.1, 12.1) des Hilfsrahmens (1) angeordnet sind, die sich im Wesentlichen vertikal oder in Richtung der Fahrzeug-Hochachse erstrecken und eine Einbuchtung (17) zur teilweisen Aufnahme eines Lenkerarmendes begrenzen.

4. Hilfsrahmen nach einem der Ansprüche 1 bis 3, **dadurch gekennzeichnet, dass** die das Einsatzteil (21, 22, 21', 22') aufnehmende Öffnung (19, 20) in einem in dem Hilfsrahmen integrierten Blechformteil (11, 12) ausgebildet ist.

5. Hilfsrahmen nach einem der Ansprüche 1 bis 4, **dadurch gekennzeichnet, dass** die das Einsatzteil (21, 22, 21', 22') aufnehmende Öffnung (19, 20) eine asymmetrische Innenkontur besitzt, wobei das Einsatzteil (21, 22, 21', 22') eine der Innenkontur komplementäre Umfangskontur aufweist.

6. Hilfsrahmen nach einem der Ansprüche 1 bis 5, **dadurch gekennzeichnet, dass** das jeweilige Einsatzteil (21, 22, 21', 22') aus einem Metallgussteil hergestellt ist, wobei in dem Metallgussteil das Verbindungsteil (23) zur Ausbildung einer Verschraubung als Gewindebohrung ausgeführt ist.

7. Hilfsrahmen nach Anspruch 6, **dadurch gekennzeichnet, dass** die Gewindebohrung (23) in einem buchsenförmigen Abschnitt (21.2, 22.2) des Einsatzteils (21, 22, 21', 22') vorgesehen ist.

8. Hilfsrahmen nach Anspruch 7, **dadurch gekennzeichnet, dass** der buchsenförmige Abschnitt (21.2, 22.2) eine gegenüber einer Außenseite des Einsatzteiles (21, 22, 21', 22') vorstehende Stirnseite (21.21, 22.21) aufweist.

9. Hilfsrahmen nach Anspruch 7 oder 8, **dadurch gekennzeichnet, dass** der buchsenförmige Abschnitt (21.2, 22.2) radial mit einer Außenseite des Einsatzteiles (21, 22, 21', 22') abschließt oder gegenüber dieser Außenseite radial vorsteht.

10. Hilfsrahmen nach einem der Ansprüche 1 bis 9, **dadurch gekennzeichnet, dass** das Einsatzteil (21, 22, 21', 22') mit dem Hilfsrahmen (1) verschweißt und/oder verlötet und/oder verklebt ist.

11. Hilfsrahmen nach einem der Ansprüche 1 bis 10, **dadurch gekennzeichnet, dass** das untere Ende der das Einsatzteil (21, 22, 21', 22') aufnehmenden Öffnung (19, 20) durch einen plattenförmigen, im Wesentlichen horizontal angeordneten Abschnitt (25) des Hilfsrahmens (1) begrenzt ist.

12. Hilfsrahmen nach Anspruch 11, **dadurch gekennzeichnet, dass** das Einsatzteil (21, 22, 21', 22') an seinem dem plattenförmigen Abschnitt (25) zugewandten Ende einen verdickten, nach außen vorstehenden Kantenabschnitt (21.3, 22.3) aufweist.

13. Hilfsrahmen nach Anspruch 2 oder 3 und Anspruch 11 oder 12, **dadurch gekennzeichnet, dass** der plattenförmige Abschnitt (25) zwischen den Öffnungen (19, 20) eine Einbuchtung (26) aufweist.

14. Hilfsrahmen nach einem der Ansprüche 1 bis 13, **dadurch gekennzeichnet, dass** das Einsatzteil (21, 22, 21', 22') neben dem Verbindungsteil (23) zur Ausbildung einer Verschraubung mindestens ein Durchgangsloch (24) aufweist.

15. Hilfsrahmen nach einem der Ansprüche 1 bis 14, **dadurch gekennzeichnet, dass** dieser als geschweißte Rahmenstruktur ausgebildet ist, wobei die Längsträger (2) und/oder der mindestens eine Querträger (3, 4) aus Blechformteilen gebildet oder zusammengesetzt sind.

## Claims

1. Subframe, in particular rear axle subframe, for a passenger vehicle, comprising at least two longitudinal members (2), at least one crossmember (3, 4) which interconnects the longitudinal members (2), vehicle body connecting elements (5.1, 5.2) for connecting the subframe (1) to a vehicle body, and at least one control arm connection (7) for each side of the vehicle, **characterised in that** the control arm connection (7) has at least one insert part (21, 22, 21', 22') which is received in an interlocking manner in an opening (19, 20) in the subframe and is integrally and/or frictionally connected to the subframe (1), the insert part (21, 22, 21', 22') having a connecting portion (23) for forming a screw connection and being chosen from a group comprising at least two different insert parts (21, 22; 21', 22'), the various insert parts (21, 22, 21', 22') differing from one another in terms of the vertical position of the connecting portion (23).

2. Subframe according to claim 1, **characterised in that** the control arm connection (7) has at least two insert parts (21, 22, 21', 22') for each side of the vehicle, which insert parts are received in an interlocking manner in openings (19, 20) in the subframe that are spaced apart in the longitudinal direction of the vehicle, and are integrally and/or frictionally connected to the subframe (1), each insert part (21, 22, 21', 22') having a connecting portion (23) for forming a screw connection and being chosen from a group comprising at least two different insert parts (21, 22, 21', 22'), the various insert parts (21, 22, 21', 22') differing from one another in terms of the vertical position of the connecting portion (23).

3. Subframe according to claim 2, **characterised in that** the openings (19, 20) are arranged in edge portions (11.1, 12.1) of the subframe (1) which extend substantially vertically or in the direction of the vertical axis of the vehicle and delimit a recess (17) for receiving in part a control arm end.

4. Subframe according to any of claims 1 to 3, **characterised in that** the opening (19, 20) receiving the insert part (21, 22, 21', 22') is formed in a sheet metal formed part (11, 12) integrated in the subframe.

5. Subframe according to any of claims 1 to 4, **characterised in that** the opening (19, 20) receiving the insert part (21, 22, 21', 22') has an asymmetrical inner contour, the insert part (21, 22, 21', 22') having a peripheral contour that is complementary to the inner contour.

6. Subframe according to any of claims 1 to 5, **characterised in that** each insert part (21, 22, 21', 22') is produced from a metal casting, the connecting portion (23) for forming a screw connection being in the form of a threaded hole in the metal casting.

7. Subframe according to claim 6, **characterised in that** the threaded hole (23) is provided in a bush-like portion (21.2, 22.2) of the insert part (21, 22, 21', 22').

8. Subframe according to claim 7, **characterised in that** the bush-like portion (21.2, 22.2) has an end face (21.21, 22.21) which protrudes relative to an outer side of the insert part (21, 22, 21', 22').

9. Subframe according to either claim 7 or claim 8, **characterised in that** the bush-like portion (21.2, 22.2) terminates radially with an outer side of the insert part (21, 22, 21', 22') or protrudes radially relative to said outer side.

10. Subframe according to any of claims 1 to 9, **characterised in that** the insert part (21, 22, 21', 22') is welded and/or soldered and/or adhesively bonded to the subframe (1).

11. Subframe according to any of claims 1 to 10, **characterised in that** the bottom end of the opening (19, 20) receiving the insert part (21, 22, 21', 22') is delimited by a plate-like portion (25) of the subframe (1) that is arranged substantially horizontally.

12. Subframe according to claim 11, **characterised in that** the insert part (21, 22, 21', 22') has a thickened, outwardly protruding edge portion (21.3, 22.3) at its end facing the plate-like portion (25).

13. Subframe according to either claim 2 or claim 3, and either claim 11 or claim 12, **characterised in that** the plate-like portion (25) has a recess (26) between the openings (19, 20).

14. Subframe according to any of claims 1 to 13, **characterised in that** the insert part (21, 22, 21', 22') has at least one through-hole (24) in addition to the connecting portion (23) for forming a screw connection.

15. Subframe according to any of claims 1 to 14, **characterised in that** it is in the form of a welded frame structure, the longitudinal members (2) and/or the at least one crossmember (3, 4) being formed of or assembled from sheet metal moulded parts.

## Revendications

1. Cadre auxiliaire, en particulier cadre auxiliaire d'essieu arrière, pour une voiture particulière, ledit cadre auxiliaire comprenant au moins deux longerons (2), au moins une traverse (3, 4) qui relie l'un à l'autre les longerons (2), comprenant des éléments de fixation (5.1, 5.2) sur la carrosserie, lesdits éléments de fixation servant à la fixation du cadre auxiliaire (1) sur une carrosserie, et comprenant, de chaque côté du véhicule, au moins une fixation (7) des bras oscillants,
**caractérisé en ce que** la fixation (7) des bras oscillants présente au moins une pièce d'insertion (21, 22, 21', 22') qui est logée, par complémentarité de forme, dans une ouverture (19, 20) du cadre auxiliaire et est assemblée avec le cadre auxiliaire (1) par continuité de matière et/ou par action de force, où la pièce d'insertion (21, 22, 21', 22') présente une pièce d'assemblage (23) servant à la formation d'une fixation par vis et est sélectionnée parmi un groupe se composant au moins de deux pièces d'insertion différentes (21, 22; 21', 22'), où les pièces d'insertion différentes (21, 22, 21', 22') se distinguent l'une de l'autre, de par la position verticale de la pièce d'assemblage (23).

2. Cadre auxiliaire selon la revendication 1, **caractérisé en ce que** la fixation (7) des bras oscillants présente, de chaque côté du véhicule, au moins deux pièces d'insertion (21, 22, 21', 22') qui sont logées, par complémentarité de forme, dans des ouvertures (19, 20) du cadre auxiliaire, lesquelles ouvertures sont espacées l'une de l'autre dans la direction longitudinale du véhicule, lesdites pièces d'insertion étant assemblées avec le cadre auxiliaire (1) par continuité de matière et/ou par action de force, où la pièce d'insertion respective (21, 22, 21', 22') présente une pièce d'assemblage (23) servant à la configuration d'une fixation par vis et est sélectionnée parmi un groupe se composant au moins de deux pièces d'insertion différentes (21, 22, 21', 22'), où les pièces d'insertion différentes (21, 22, 21', 22') se distinguent l'une de l'autre, de par la position verticale de la pièce d'assemblage (23).

3. Cadre auxiliaire selon la revendication 2, **caractérisé en ce que** les ouvertures (19, 20) sont disposées dans des parties en arête (11.1, 12.1) du cadre auxiliaire (1), lesquelles parties en arête s'étendent pratiquement de façon verticale ou dans la direction de l'axe vertical du véhicule et délimitent une partie en creux (17) servant au logement partiel d'une extrémité d'un bras oscillant.

4. Cadre auxiliaire selon l'une quelconque des revendications 1 à 3, **caractérisé en ce que** l'ouverture (19, 20) logeant la pièce d'insertion (21, 22, 21', 22') est configurée dans une pièce de forme en tôle (11, 12) intégrée dans le cadre auxiliaire.

5. Cadre auxiliaire selon l'une quelconque des revendications 1 à 4, **caractérisé en ce que** l'ouverture (19, 20) logeant la pièce d'insertion (21, 22, 21', 22') a un contour intérieur asymétrique, où la pièce d'insertion (21, 22, 21', 22') présente un contour circonférentiel complémentaire par rapport au contour intérieur.

6. Cadre auxiliaire selon l'une quelconque des revendications 1 à 5, **caractérisé en ce que** la pièce d'insertion respective (21, 22, 21', 22') est fabriquée à partir d'une pièce coulée en métal, où la pièce d'assemblage (23) servant la configuration d'une fixation par vis est réalisée, dans la pièce coulée en métal, comme un trou taraudé.

7. Cadre auxiliaire selon la revendication 6, **caractérisé en ce que** le trou taraudé (23) est prévu dans une partie (21.2, 22.2) en forme de douille de la pièce d'insertion (21, 22, 21', 22').

8. Cadre auxiliaire selon la revendication 7, **caractérisé en ce que** la partie (21.2, 22.2) en forme de douille présente une face frontale (21.21, 22.21) faisant saillie par rapport à un côté extérieur de la pièce d'insertion (21, 22, 21', 22').

9. Cadre auxiliaire selon la revendication 7 ou 8, **caractérisé en ce que** la partie (21.2, 22.2) en forme de douille se termine, dans le sens radial, par un côté extérieur de la pièce d'insertion (21, 22, 21', 22'), ou bien est en saillie, dans le sens radial, par rapport à ce côté extérieur.

10. Cadre auxiliaire selon l'une quelconque des revendications 1 à 9, **caractérisé en ce que** la pièce d'insertion (21, 22, 21', 22') est assemblée avec le cadre auxiliaire (1), par soudage et/ou par brasage et/ou par collage.

11. Cadre auxiliaire selon l'une quelconque des revendications 1 à 10, **caractérisé en ce que** l'extrémité inférieure de l'ouverture (19, 20) logeant la pièce d'insertion (21, 22, 21', 22') est délimitée par une partie (25) en forme de plaque du cadre auxiliaire (1), ladite partie étant disposée pratiquement de manière horizontale.

12. Cadre auxiliaire selon la revendication 11, **caractérisé en ce que** la pièce d'insertion (21, 22, 21', 22') présente, au niveau de son extrémité tournée vers la partie (25) en forme de plaque, une partie en arête (21.3, 22.3) plus épaisse faisant saillie vers l'extérieur.

13. Cadre auxiliaire selon la revendication 2 ou 3 et selon la revendication 11 ou 12, **caractérisé en ce que** la partie (25) en forme de plaque présente une partie en creux (26) située entre les ouvertures (19, 20).

14. Cadre auxiliaire selon l'une quelconque des revendications 1 à 13, **caractérisé en ce que** la pièce d'insertion (21, 22, 21', 22') présente au moins un trou de passage (24), en plus de la pièce d'assemblage (23) servant à la configuration d'une fixation par vis.

15. Cadre auxiliaire selon l'une quelconque des revendications 1 à 14, **caractérisé en ce que** celui-ci est configuré comme une structure de cadre soudée, où les longerons (2) et/ou la traverse (3, 4) au moins au nombre de un sont formés ou composés à partir de pièces de forme en tôle.
